# EUROPÄISCHE PATENTANMELDUNG

(11) **EP 1 162 390 A1**
(43) Veröffentlichungstag der Anmeldung: **12.12.2001**
(21) Anmeldenummer: 00112419.7
(22) Anmeldetag: 09.06.2000
(51) Int. Cl.: F16H 57/05, F16H 61/00

(54) **Schmiereinrichtung für ein stufenlos verstellbares Umschlingungsgetriebe**

(71) Anmelder: Ford Global Technologies, Inc., A subsidiary of Ford Motor Company, Dearborn, Michigan 48126 (US)
(72) Erfinder: Pfingsten, Friedhelm, 50259 Geyen (DE); Kohl, Ernst, 50968 Köln (DE)
(74) Vertreter: Drömer, Hans-Carsten, Dipl.-Ing.

(57) **Zusammenfassung**

Die Erfindung bezieht sich auf eine Schmiereinrichtung für ein stufenlos in seiner Übersetzung verstellbares Umschlingungsgetriebe in Kraftfahrzeugen mit zwei Riemenscheiben (1,2) die über ein Kraftübertragungselement (4) in getrieblicher Wirkverbindung stehen. Die Erfindung zeichnet sich dadurch aus, dass die Schmiereinrichtung Spritzöffnungen (14,21) aufweist, die auf die vom Kraftübertragungselement beaufschlagten kegelförmigen Laufflächen (13) einer oder beider Riemenscheiben gerichtet sind, so dass Schmiermittel direkt auf die Laufflächen aufgebracht wird. Damit kann der Schmiermittelstrom verkleinert werden und die Geräuschentwicklung, die bei zu starker Schmierung des Kraftübertragungsmittels auftritt, wird verhindert.

## Beschreibung

Die Erfindung bezieht sich auf eine Schmiereinrichtung für ein stufenlos in seiner Übersetzung verstellbares Umschlingungsgetriebe in Kraftfahrzeugen nach dem Oberbegriff des Anspruches 1.

Eine gattungsgemäße Schmiereinrichtung mit zumindest einem Flüssigkeitszuführungsröhrchen und zumindest zwei Ausströmöffnungen ist in der EP 0 574 085 beschrieben. Die beiden Ausströmöffnungen sind axial nebeneinander angeordnet und stellen so sicher, dass innerhalb eines bestimmten Bereiches in der Mitte des Kraftübertragungselementes für alle Positionen des Kraftübertragungselementes Kühl- oder Schmierflüssigkeit auf das besagte Kraftübertragungselement aufgebracht wird. Mit dieser Schmiereinrichtung wird vor allem das Kraftübertragungselement mit Schmiermittel beaufschlagt.

Eine weitere gattungsgemäße Schmiereinrichtung ist in der WO 98 20 269 beschrieben, bei der zwei Ausströmöffnungen so angeordnet sind, dass die erste Ausströmöffnung in einer Ebene angeordnet ist, die der Mittelebene der ersten Riemenscheibe bei maximalem Abstand der beiden Riemenscheibenhälften entspricht, und dass die zweite Ausströmöffnung in einer Ebene angeordnet ist, die der Mittelebene der zweiten Riemenscheibe bei maximalem Abstand der beiden Riemenscheibenhälften entspricht. Auch hier sind die beiden Ausströmöffnungen fest angeordnet und eignen sich vorwiegend zur Schmierung des Kraftübertragungselementes.

Bei der direkten Aufbringung des Schmiermittels auf das Kraftübertragungselement wird ein beträchtlicher Teil des Schmiermittels durch die entstehenden Fliehkräfte weggeschleudert, so dass die hochbelasteten Flanken des Kraftübertragungsmittels nur mit hoher Schmiermittelförderleistung ausreichend geschmiert und gekühlt werden können. Bei bestimmten Betriebszuständen, wenn sehr viel Schmiermittel direkt auf dem Kraftübertragungsmittel aufgebracht wurde, entstehen im Kraftübertragungsmittel unerwünschte Kratzgeräusche.

Aufgabe der Erfindung ist es deshalb, die Schmierung des Kraftübertragungsmittels dahingehend zu optimieren, dass mit geringem Schmiermitteleinsatz optimal geschmiert und gekühlt wird und unerwünschte Kratzgeräusche unterdrückt werden.

Gelöst wird diese Aufgabe mit den Merkmalen des Anspruches 1.

Indem die Schmiereinrichtung Spritzöffnungen aufweist, die auf die vom Kraftübertragungselement beaufschlagten kegelförmigen Laufflächen einer oder beider Riemenscheibenhälften von mindestens einer Riemenscheibe gerichtet sind, wird dass Schmiermittel nicht direkt auf das Kraftübertragungselement aufgebracht, sondern zuerst auf die kegelförmigen Laufflächen der Riemenscheibenhälften. Dabei ist unter Schmiermittel jede Mittel zu verstehen, die zur Schmierung und/oder Kühlung des Kraftübertragungselementes einschließlich der Riemenscheiben eingesetzt wird.

Bevorzugt sind die Schmiermittelstrahlen dabei auf den Bereich der kegelförmigen Laufflächen möglichst nahe den Riemenscheibennaben hin ausgerichtet, damit das dort auftreffende Schmiermittel durch die Drehung der Riemenscheiben in einen gleichmäßig über die Laufflächen verteilten Schmiermittelfilm verwandelt wird. Dieser Schmiermittelfilm schmiert und kühlt das Kraftübertragungselement direkt an den hochbeanspruchten Flanken, die mit den kegelförmigen Laufflächen der Riemenscheiben zusammenwirken, mithin also genau dort, wo die meiste Verlustarbeit bei Umschlingungsgetrieben entsteht. Damit erfüllt die Schmiervorrichtung die Aufgabe der Schmierung des Kraftübertragungsmittels auch bei geringer Schmiermittelförderleistung, da fast alles von der Schmiervorrichtung verteilte Schmiermittel zur Schmierung und Kühlung beiträgt.

Für alle Ausführungen der Schmiervorrichtung gilt, dass das Schmiermittel auf die Laufflächen einer oder beider Riemenscheibenhälften einer Riemenscheibe aufgebracht werden kann. Ebenso kann nur eine Riemenscheibe oder es können beide Riemenscheiben mit Schmiermittel beaufschlagt werden. Weiterhin kann das Schmiermittel mit der erfindungsgemäßen Schmiervorrichtung zusätzlich auch an eine oder mehrere Stellen direkt auf das Kraftübertragungselement gespritzt werden. Durch entsprechende Anordnung mehrerer Spritzöffnungen können somit eine oder beide Riemenscheiben und das Kraftübertragungselement mit derselben Schmiervorrichtung mit Schmiermittel versorgt werden.

Auf dem Kraftübertragungsmittel selber befindet sich durch die Schmiereinrichtung relativ wenig Schmiermittel, was die Entstehung unerwünschter Kratzgeräusche verhindert. In bestimmten Betriebszuständen des Umschlingungsgetriebes entstehen diese Kratzgeräusche vor allem bei Kraftübertragungsmitteln, die aus Schubgliederbändern bestehen, und wenn zwischen den einzelnen Schubgliedern zuviel Schmiermittel aufgebracht ist. Ist das Getriebe im Teillast- oder im Lastwechselbereich, reicht der wirkende Schüb im Kraftübertragungselement nicht aus, das Schmiermittel zwischen den einzelnen Schubgliedern sofort wieder zu entfernen. Der entstehende Schmiermittelfilm ist dicker als der zur Schmierung der Schubglieder erforderliche dünne Schmiermittelfilm. Das gesamte Kraftübertragungselement wird dadurch etwas gelängt und schlägt zwischen den beiden Riemenscheiben leichte Wellen. Diese Wellenbewegung lässt die Schubglieder unkontrolliert aneinanderreiben, wodurch die unerwünschten Kratzgeräusche entstehen. Dies wird verhindert, wenn erfindungsgemäß das Schmiermittel auf die Laufflächen der Riemenscheiben aufgebracht wird. Zwischen den Schubgliedern des Kraftübertragungselementes bildet sich dann nur der gewünschte, dünne Schmiermittelfilm.

In der Regel ist bei stufenlos verstellbaren Umschlingungsgetrieben mindestens eine Riemenscheibenhälfte axial auf der Welle verschiebbar. Um in allen axialen Positionen einer Riemenscheibenhälfte die Schmierung der Laufflächen sicherzustellen, sind mehrere Spritzöffnungen vorgesehen, die je nach Stellung der Riemenscheibe den erforderlichen Schmiermittelauftrag auf die Laufflächen der Riemenscheibenhälfte sicherstellt.

Eine weitere Ausführung zur Sicherstellung der Schmierung in verschiedenen axialen Stellungen einer Riemenscheibenhälfte sieht vor, dass ein oder mehrere Schmiermittelstrahlen unter verschiedenen Spritzwinkeln zu ' den Riemenscheibenmittelebenen austreten. Die Spritzwinkel sind jeweils so gewählt, dass die axiale Verschiebung der Riemenscheibenhälfte zu einer möglichst geringen Wanderung des Auftreffpunktes des Schmiermittelstrahles auf den kegelförmigen Laufflächen der sich axial bewegenden Riemenscheibenhälfte führt. Diese Anordnung trägt auch bei axial feststehenden Riemenscheibenhälften zu einer besseren Schmierung bei, da der Auftreffwinkel des Schmiermittelstrahles an eine optimale Schmiermittelverteilung auf der Lauffläche angepasst werden kann.

Eine vorteilhafte Ausführung der erfindungsgemäßen Schmiervorrichtung sieht vor, dass zwischen den beiden Riemenscheiben ein Schmierrohr angeordnet ist, durch welches Schmiermittel fließt und das eine oder mehrere Spritzöffnungen aufweist, die auf die kegelförmigen Laufflächen der Riemenscheibenhälften ausgerichtet sind. Dies bedeutet wenig Bauaufwand für die Schmiervorrichtung. Im Schmierrohr sind lediglich die Spritzöffnungen mit der Ausrichtung auf die Laufflächen der Riemenscheiben einzubringen.

Bei einer weiteren Ausführung ist ein Spritzröhrchen zwischen zwei Riemenscheibenhälften einer Riemenscheibe angeordnet, das Spritzröhrchen mit einer Versorgungsleitung für Schmiermittel verbunden und das Spritzröhrchen weist mindestens eine Spritzöffnung auf, die auf die kegelförmige Lauffläche einer Riemenscheibenhälfte ausgerichtet ist. Ein solches Spritzröhrchen bringt gezielt Schmiermittel auf die Laufflächen auf. Durch die direkte Anordnung der Spritzöffnungen neben den Laufflächen ist ein nur geringer Schmiermitteldruck erforderlich, und auch an die Genauigkeit der Spritzöffnungen sind keine hohen Anforderungen zu stellen. Das Spritzröhrchen weist vorteilhaft mindestens eine zusätzliche Spritzöffnung auf, die auf die kegelförmige Lauffläche der anderen Riemenscheibenhälfte ausgerichtet ist.

Weitere vorteilhafte Ausgestaltungen der Erfindung sind den folgenden Zeichnungen zu entnehmen. Es zeigen:
- Fig. 1a, b: die Draufsicht einer Schmiereinrichtung mit Schmierrohr und Riemenscheiben;
- Fig. 2: die Seitenansicht einer Schmiereinrichtung mit Schmierohr und Riemenscheiben;
- Fig. 3: die Draufsicht einer Schmiereinrichtung mit Spritzröhrchen; und
- Fig. 4: die Seitenansicht einer Schmiereinrichtung mit Spritzröhrchen.

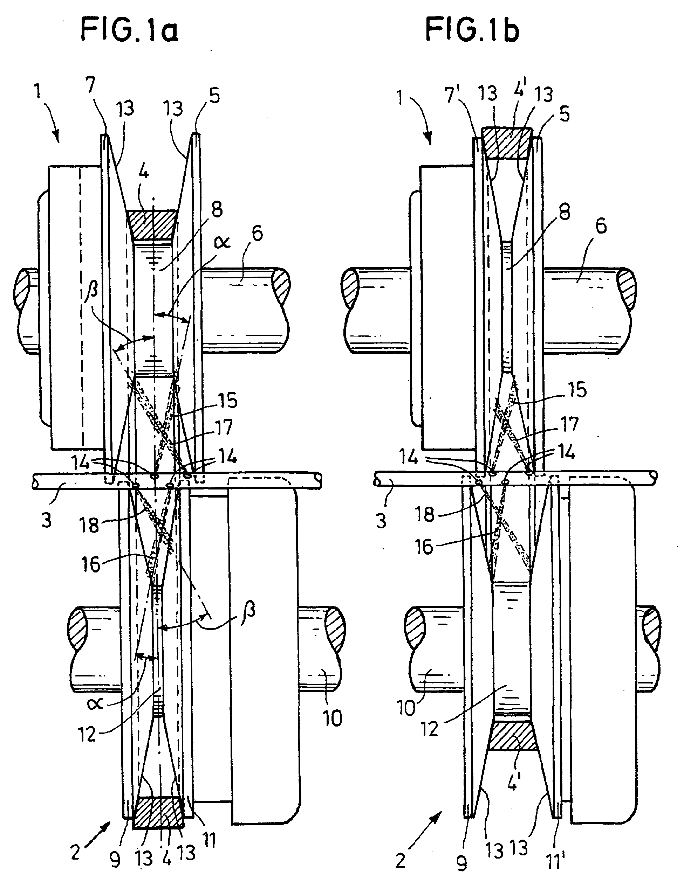

In Fig. 1a ist die Draufsicht auf eine Schmiereinrichtung gezeigt. Zwischen der ersten Riemenscheibe 1 und der zweiten Riemenscheibe 2 ist das Schmierrohr 3 angeordnet. Mittels des Kraftübertragungselementes 4 stehen die Riemenscheiben 1 und 2 in getrieblicher Verbindung. Die erste Riemenscheibe 1 weist die feststehende Riemenscheibenhälfte 5, die auf einer ersten Welle 6 axial verschiebbare Riemenscheibenhälfte 7 und die zwischen den beiden Riemenscheibenhälften angeordnete Riemenscheibennabe 8 auf. Entsprechend weist die zweite Riemenscheibe 2 die feststehende Riemenscheibehälfte 9, die auf einer zweiten Welle 10 axial verschiebbare Riemenscheibenhälfte 11 und die zwischen beiden Riemenscheibenhälften angeordnete Riemenscheibennabe 12 auf. Alle Riemenscheibenhälften weisen kegelförmige Laufflächen 13 auf, die vom Kraftübertragungselement 4 beaufschlagt sind.

Dargestellt sind in Fig. 1a für die beiden beweglichen Riemenscheibenhälften 7 und 11 das niedrigste Übersetzungsverhältnis. Das heißt: die Riemenscheibenhälften 5 und 7 der ersten Riemenscheibe 1 weisen den größten Abstand auf, während die beiden Riemenscheibenhälften 9 und 11 der zweiten Riemenscheibe 2 den geringsten Abstand aufweisen.

In Fig. 1b ist das höchste Übersetzungsverhältnis gezeigt, bei dem bei der ersten Riemenscheibe 1 die beiden Riemenscheibenhälften 5 und 7' den geringsten Abstand aufweisen, und bei der zweiten Riemenscheibe 2 die Riemenscheibenhälften 9 und 11' den größten Abstand aufweisen. Das Kraftübertragungselement 4' ist jetzt entsprechend der Übersetzungsänderung in axialer Richtung der Wellen 6 und 10 verschoben.

Zur Schmierung des Kraftübertragungsmittels 4 und der Riemenscheiben 1 und 2 weist das Schmierrohr 3 Spritzöffnungen 14 auf, die mehrere Schmiermittelstrahlen 15, 16, 17, 18 bewirken. Vorteilhaft treffen die Schmiermittelstrahlen möglichst nahe im Bereich der Riemenscheibennaben 8 und 11 an den Laufflächen 13 der Riemenscheibenhälften auf. Im Falle der feststehenden Riemenscheibenhälften 6 und 9 treffen Schmiermittelstrahl 15 auf die erste Riemenscheibe 1 und Schmiermittelstrahl 16 auf die zweite Riemenscheibe 2 unter dem Spritzwinkel α auf. Dabei bestimmt sich der Spritzwinkel α aus der Richtung der Schmiermittelstrahlen 15, 16 und der Mittelebenen der Riemenscheiben 1 und 2. Diese beiden Schmiermittelstrahlen werden ständig aufrechterhalten, unabhängig von der Stellung der beweglichen Riemenscheibenhälften 7 und 11.

Bei den axial beweglichen Riemenscheibenhälften 7 und 11 treffen Schmiermittelstrahl 17 auf die erste Riemenscheibe 1 und Schmiermittelstrahl 18 auf die zweite Riemenscheibe 2 unter dem Spritzwinkel β auf. Der Spritzwinkel β ist so gewählt, das die Lauffläche 13 der beweglichen Riemenscheibenhälfte 7, 7' der ersten Riemenscheibe 1 sowohl im niedrigsten Übersetzungsverhältnis (Fig. 1a) als auch im höchsten Übersetzungsverhältnis (Fig. 1b) immer möglichst nahe an der Riemenscheibennabe 8 vom Schmiermittelstrahl 17 getroffen wird. Das Gleiche gilt für die bewegliche Riemenscheibenhälfte 11, 11' der zweiten Riemenscheibe 2: Schmiermittelstrahl 18 trifft immer möglichst nahe der Riemenscheibennabe 12 auf die Laufflächen 13.

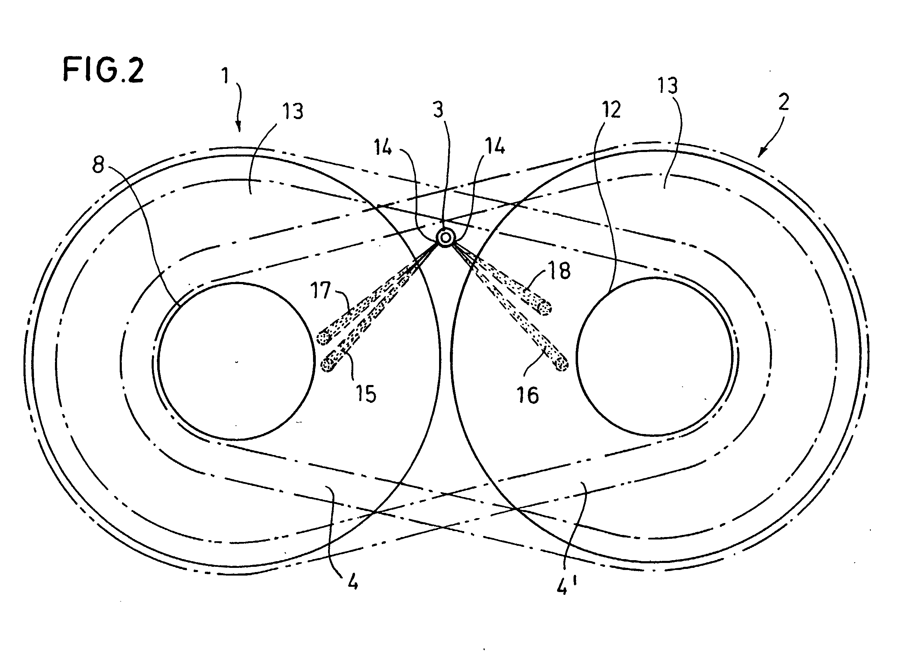

Die Seitenansicht der Schmiereinrichtung mit den beiden Riemenscheiben 1 und 2 und dem Schmierrohr 3 zeigt Fig. 2. Schematisch dargestellt sind die beiden Extremstellungen des Kraftübertragungselementes 4, 4': Im niedrigsten Übersetzungsverhältnis befindet sich Kraftübertragungselement 4, im höchsten Übersetzungsverhältnis Kraftübertragungselement 4'. Gezeigt sind die Schmiermittelstrahlen 15, 16, 17, 18 beim niedrigsten Übersetzungsverhältnis, wo sie auf die Laufflächen 13 treffen. Die Schmiermittelstrahlen 15, 16 der feststehenden Riemenscheibenhälften 5, 9 treffen unabhängig vom Übersetzungsverhältnis immer in der Nähe der Riemenscheibennaben 8, 12 auf die Laufflächen 13.

Der Schmiermittelstrahl 17 der axial beweglichen Riemenscheibenhälften 7 der ersten Riemenscheibe 1 trifft ebenfalls nahe der Riemenscheibennabe 8 auf die Lauffläche 13. Dies entspricht der Anforderung, das bei niedrigem Übersetzungsverhältnis nahe an der Riemenscheibennabe 8 befindliche Kraftübertragungsmittel 4 zu schmieren. Würde der Strahl weiter außen auftreffen, wäre die Schmierung nicht sichergestellt. Der Schmiermittelstrahl 18 der axial beweglichen Riemenscheibenhälften 11 trifft, bedingt durch den geringen Abstand der beiden Riemenscheibenhälften 9, 11 der zweiten Riemenscheibe 2 weiter entfernt von der Riemenscheibennabe 10 auf die Lauffläche 13 auf. Da sich bei der zweiten Riemenscheibe 2 bei niedrigem Übersetzungsverhältnis das Kraftübertragungsmittel 4 auf einem großen Radius befindet, ist die Schmierung sichergestellt.

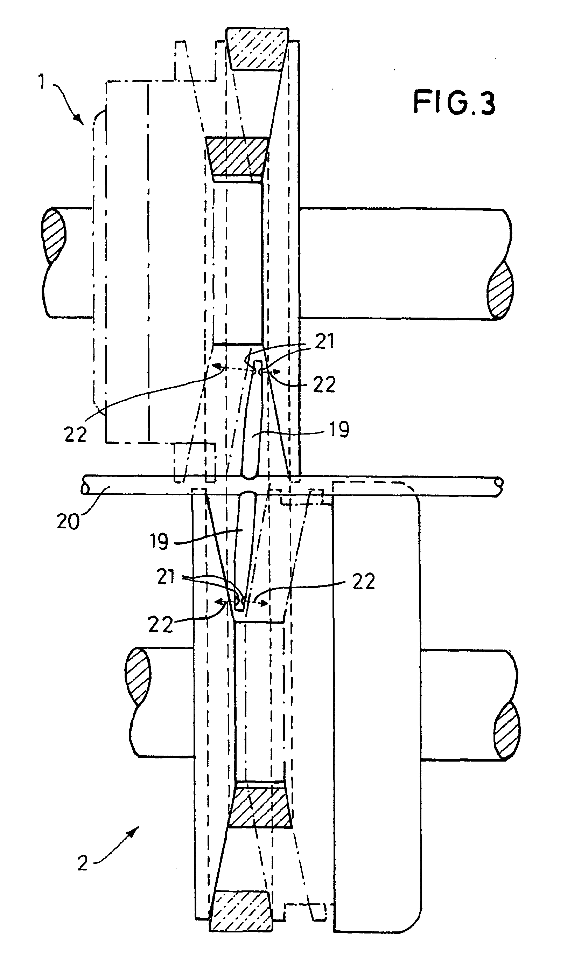

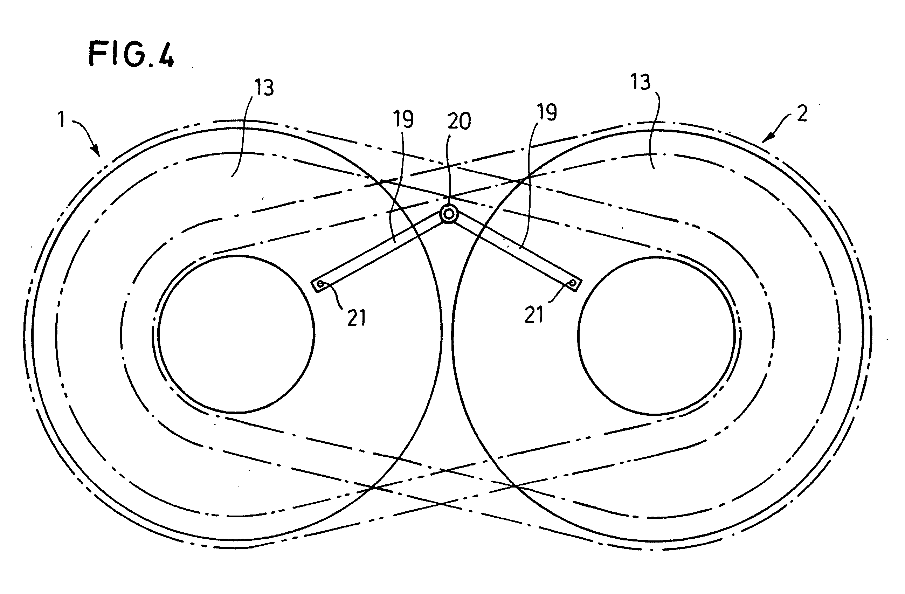

In Fig. 3 ist die Schmiereinrichtung mit zwei Spritzröhrchen 19 gezeigt, die zwischen den Riemenscheibenhälften der ersten Riemenscheibe 1 und der zweiten Riemenscheibe 2 angeordnet sind. Mittels eines zwischen den beiden Riemenscheiben 1, 2 angeordneten Schmiermittelrohres 20, an welches die beiden Spritzröhrchen 19 angeschlossen sind, werden die Spritzröhrchen 19 mit Schmiermittel versorgt. Jeweils an den Enden weisen beide Spritzröhrchen Spritzöffnungen 21 auf, durch die Schmiermittelstrahlen 22 austreten, die dann auf die Laufflächen 13 treffen. Die entsprechende Seitenansicht ist in Fig. 4 gezeigt.

## Patentansprüche

1. Schmiereinrichtung eines stufenlos in seiner Übersetzung verstellbaren Umschlingungsgetriebes für Kraftfahrzeuge, wobei das Umschlingungsgetriebe zwei Riemenscheiben (1, 2) aufweist, die über ein Kraftübertragungselement (4) in Form eines Endlosbandes in getrieblicher Wirkverbindung stehen und jede Riemenscheibe (1, 2) zwei Riemenscheibenhälften (5, 7, 9, 11) aufweist,
**dadurch gekennzeichnet, dass**
die Schmiereinrichtung Spritzöffnungen (14, 21) aufweist, die auf die vom Kraftübertragungselement (4) beaufschlagten kegelförmigen Laufflächen (13) einer oder beider Riemenscheibenhälften (5, 7, 9, 11) von mindestens einer Riemenscheibe (1, 2) gerichtet sind, so dass Schmiermittel auf die Laufflächen (13) aufgebracht wird.

2. Schmiereinrichtung nach Anspruch 1,
**dadurch gekennzeichnet, dass**
die Schmiereinrichtung Spritzöffnungen (14, 21) aufweist, die auf das Kraftübertragungselement (4) gerichtet sind.

3. Schmiereinrichtung nach Anspruch 1 oder 2,
**dadurch gekennzeichnet, dass**
dass ein oder mehrere Schmiermittelstrahlen (15, 16, 17, 18) unter verschiedenen Spritzwinkeln zu den Riemenscheibenmittelebenen austreten.

4. Schmiereinrichtung nach Anspruch 1, 2 oder 3,
**dadurch gekennzeichnet, dass**
zwischen den beiden Riemenscheiben (1, 2) ein Schmierrohr (3) angeordnet ist, durch welches Schmiermittel fließt und das eine oder mehrere Spritzöffnungen (14) aufweist, die auf die kegelförmigen Laufflächen (13) der Riemenscheibenhälften (5, 7, 9, 11) ausgerichtet sind.

5. Schmiereinrichtung nach Anspruch 1 oder 2,
**dadurch gekennzeichnet, dass**
ein Spritzröhrchen (19) zwischen zwei Riemenscheibenhälften (5, 7, 9, 11) einer Riemenscheibe (1, 2) angeordnet ist, das Spritzröhrchen (19) mit einem Schmiermittelrohr (20) verbunden ist und das Spritzröhrchen (19) mindestens eine Spritzöffnung (21) aufweist, die auf die kegelförmige Lauffläche (13) einer Riemenscheibenhälfte (5, 7, 9, 11) gerichtet ist.

6. Schmiereinrichtung nach Anspruch 5,
**dadurch geKennzeichnet, dass**
das Spritzröhrchen (19) eine oder mehrere zusätzliche Spritzöffnungen (21) aufweist, die auf die kegelförmige Lauffläche (13) der anderen Riemenscheibenhälfte (5, 7, 9, 11) ausgerichtet sind.

7. Schmiereinrichtung nach Anspruch 5 oder 6,
**dadurch gekennzeichnet, dass**
bei beiden Riemenscheiben (1, 2) Spritzröhrchen (19) zwischen den Riemenscheibenhälften (5, 7, 9,11) angeordnet sind.

8. Verfahren zur Schmierung eines stufenlos in seiner Übersetzung verstellbaren Umschlingungsgetriebes für Kraftfahrzeuge, wobei das Umschlingungsgetriebe zwei Riemenscheiben (1, 2) aufweist, die über ein Kraftübertragungselement (4) in Form eines Endlosbandes in getrieblicher Wirkverbindung stehen und jede Riemenscheibe (1, 2) zwei Riemenscheibenhälften (5, 7, 9, 11) aufweist,
**dadurch gekennzeichnet, dass**
das Schmiermittel auf die vom Kraftübertragungselement (4) beaufschlagten kegelförmigen Laufflächen (13) einer oder beider Riemenscheibenhälften (5, 7, 9, 11) von mindestens einer Riemenscheibe (1, 2) aufgebracht wird.

9. Verfahren zur Schmierung nach Anspruch 8,
**dadurch gekennzeichnet, dass**
das Schmiermittel zusätzlich auf das Kraftübertragungselement (4) aufgebracht wird.

10. Verfahren zur Schmierung nach Anspruch 8 oder 9,
**dadurch gekennzeichnet, dass**
dass ein oder mehrere Schmiermittelstrahlen (15, 16, 17, 18) unter verschiedenen Spritzwinkeln zu den Riemenscheibenmittelebenen austreten.
